# EUROPÄISCHE PATENTANMELDUNG

(11) **EP 1 179 575 A2**
(43) Veröffentlichungstag der Anmeldung: **13.02.2002**
(21) Anmeldenummer: 01710040.5
(22) Anmeldetag: 03.08.2001
(51) Int. Cl.: C09D 183/06, C09D 183/14

(54) **Verfahren zur Herstellung von pigmentierten Zusammensetzungen nach dem Sol-Gel-Verfahren und damit erhältliche Zusammensetzung**

(30) Priorität: 06.08.2000 DE 10039404
(71) Anmelder: NTC Nanotech Coatings GmbH, 66636 Tholey (DE)
(72) Erfinder: Wagner, Georg Dr., 66646 Marpingen (DE)
(74) Vertreter: Mutzbauer, Helmut, Dr.

(57) **Zusammenfassung**

Verfahren zur Herstellung von Pigmente oder Füllstoffe enthaltenden Zusammensetzungen auf der Grundlage von Polysiloxanen mittels des Sol-Gel-Prozesses, wobei man in einem ersten Schritt Epoxygruppen enthaltende Organosilane (Alkoxysilane) zu einem Sol hydrolysiert und das Sol in einem zweiten Schritt in ein Gel überführt, wobei Pigmente oder Füllstoffe eines mittleren Teilchendurchmessers von mindestens 500 nm und gegebenenfalls ein aramatisches Polyol mit einem durchschnittlichen Molgewicht von höchstens 1000 eingesetzt werden und damit erhältliche Zusammensetzung.

## Beschreibung

Beschichtungen auf der Grundlage von organisch modifizierten Polysiloxanen sind bekannt. Sie haben wertvolle physikalische und chemische Eigenschaften und haften hervorragend auf verschiedenen Untergründen (Metalle wie Stahl, Messing, Aluminium, Magnesium; Keramik; Polymere; Glas). Sie sind mechanisch widerstandsfähig, z.B. gegen Abrieb und chemisch gegen die Einwirkung von fast allen üblicherweise auftretenden Chemikalien. Die bekannten Zusammensetzungen sind transparent.

Diese Beschichtungen werden über den sog. Sol-Gel-Prozess hergestellt. Dabei hydrolysiert man Alkoxysilane und gewinnt wässrige Sole von meist oligomeren, zeitweise stabilen, kondensationsfähigen Organosilanolen, die schließlich in Gele übergehen. Die Gele bilden, wenn sie auf ein Substrat aufgebracht worden sind, schließlich durch weiteren Wasser- oder Lösungsmittelentzug entsprechende Überzüge. Eine Beschreibung des Sol-Gel-Verfahrens, das für die Zwecke der vorliegenden Erfindung eine ausreichende Einführung darstellt, ist beispielsweise der DE-A1-43 38 360 zu entnehmen, auf deren Inhalt anstelle einer Wiederholung verwiesen wird. Verschiedene Abwandlungen des Verfahrens bzw. der Zusammensetzungen sind auch in den Dokumenten WO 95/13326 und WO 97/20005 beschrieben, die einen Hintergrund zur weiteren Erläuterung der nachstehend beschriebenen Erfindung bilden.

Das als Sol erhaltene Hydrolysat kann modifiziert, d.h. mit Zusätzen versehen werden und eignet sich als Beschichtungsmittel, das nach dem Aufbringen auf einem Substrat in ein Gel überführt und schließlich thermisch zu einem festhaftenden, normalerweise durchsichtigen (transparenten) Überzug verdichtet werden kann. Aus diesem Grunde wurden Polysiloxangele bisher z.B. als Überzüge zur Verbesserung der Kratzfestigkeit optischer organischer Gläser verwendet.

Die bisherigen Anwendungen haben sich, vor allen Dingen wegen des relativ hohen Preises der Rohstoffe, weitgehend auf solche Beschichtungen empfindlicher Oberflächen, z.B. Brillengläsern aus organischen Polymeren beschränkt, die nachträglich kratzfester oder sonst widerstandsfähiger gemacht werden sollten, als dies die Polymeren von sich aus sind. In jedem Falle wurde darauf geachtet, dass die Beschichtungen dabei mehr oder weniger transparent blieben. Soweit Pigmente eingesetzt wurden (vgl. DE-A1-43 38 360), handelte es sich stets um äußerst feinteilige, d.h. kolloide Materialien, deren Teilchendurchmesser deutlich kleiner als der Wellenlängenbereich des sichtbaren Lichts (400-800 nm) war, so-dass allenfalls opaleszierende Effekte erhalten wurden. Es wird zwar in der WO 95/13326 darauf hingewiesen, daß sich mit größeren Teilchen (das Dokument spricht von Partikelgrößen von mehreren µm) die Härte der Überzüge steigern lässt, jedoch wird dieser Hinweis nicht weiter verfolgt. Dies mag auch daran gelegen haben, dass es bisher nicht gelungen ist, Pigmente oder andere Füllstoffe mit einer mittleren Partikelgröße über 500 nm (0,5 µm) in der begrenzten Verarbeitungszeit hinreichend homogen und in der benötigten Menge in die zu verarbeitenden Sole einzuarbeiten.

Wie schon erwähnt, weisen die erzielten Schichten im Vergleich zu organischen Polymeren eine relativ große Härte auf, sind jedoch im Vergleich zu anorganischen Materialien immer noch relativ weich. Dies rührt daher, dass es bei der Aushärtung zwar über die Silanolgruppen des Siloxanoligomeren zu einer starken Vernetzung kommt, daß aber aufgrund ihrer sehr geringen Größe (in molekularen Dimensionen, d.h. < 1 nm) die mechanischen Eigenschaften, wie z.B. Härte und Abriebbeständigkeit der Teilchen nicht zum Tragen kommen. Durch Zusatz kleiner Teilchen (Größe im Kolloidbereich) aus SiO₂ (z.B. Aerosil® -Marken des Herstellers DEGUSSA) ist zwar die Herstellung transparenter Schichten mit erhöhter Abriebfestigkeit gelungen. Die zugesetzten Mengen an solchen Teilchen sind aber nur gering, weil die kleinen Teilchen eine hohe Oberflächenreaktivität besitzen, die zu Agglomeration und damit Viskositätserhöhung führt.

Somit ist eine Aufgabe der vorliegenden Erfindung die Bereitstellung eines organisch modifizierten anorganischen Systems, das in seiner Härte deutlich über dem der im Stand der Technik beschriebenen Materialien liegt. Darüber hinaus soll das System auch die Herstellung stabiler, zur Herstellung von Beschichtungen geeigneter Zwischenprodukte mit über die Zeit konstanten Eigenschaften und die Einstellung variabler oberflächenphysikalischer und oberflächenchemischer Eigenschaften ermöglichen, wie z.B. Hydrophilie oder Hydrophobie, auch in Kombination mit Oleophobie. Ein weiteres Ziel der Erfindung ist die Schaffung eingefärbter, mit dem Sol-Gel-Verfahren erhältlicher Zusammensetzungen mit wertvollen Eigenschaften wie z.B. hoher Deckkraft.

Bisher werden für den Korrosionsschutz von Metalloberflächen in der Regel Überzüge verwendet, die eine gewisse dauerhafte Verbindung mit der Oberfläche eingehen, z.B. durch Bildung von Mischoxiden (mit Pb₃O₄ auf Eisenoberflächen, mit Cr₂O₃ auf Aluminiumoberflächen usw.) und nach der üblichen Vorstellung eine reaktionsträge sog. Passivierungsschicht bilden. Mit diesen Oberflächenverbindungen wird verhindert, daß Wasser in Verbindung mit Sauerstoff mit dem Substratmaterial eine Reaktion eingehen kann, die zu einer zunächst oberflächlichen, später tiefreichenden Oxidation des metallischen Substrats führt. Die Passivierungsschicht hat in der Regel weiterhin die Eigenschaft, daß sie selbst durch Feuchte wiederum passivierte Oberflächen bildet (basische Carbonate, Hydroxide, Oxide). Rein organische Lacke haben die Eigenschaft, daß sie Permeation von Wasserdampf und Sauerstoff ermöglichen und damit keinen Schutz gegen den Angriff von Feuchte und Sauerstoff auf die Metalloberflächen bieten. Aus diesem Grund gelingt es nicht, Metalle wie Eisen oder Aluminium ohne eine vorhergehende Passivierung durch die bloße Beschichtung mit organischen Polymerlacken vor Korrosion zu schützen.

Die nach dem Sol-Gel-Verfahren erhaltenen, organisch modifizierten anorganischen Beschichtungsmaterialien weisen im Prinzip die gleichen Nachteile auf wie manche oberflächenharten, rein organischen Überzüge, z.B. sind sie sehr spröde und neigen zur Bildung von Mikrorissen (besonders bei Wechsellast-Biegebeanspruchung) . Durch diese Mikrorissbildung kann die Oberfläche geschädigt werden und es kann Korrosion einsetzen.

Eine zweite Aufgabe der vorliegenden Erfindung ist somit die Bereitstellung eines organisch modifizierten anorganischen Systems, das sich z.B. zum Schutz von Metalloberflächen eignet, ohne gleichzeitig die bisherigen Nachteile entsprechender Systeme, wie z.B. Sprödigkeit, Mikrorissbildung und schlechte Haftung auf dem Substrat zu haben.

Die vorstehend genannten Aufgaben werden gelöst durch das Verfahren gemäß Anspruch 1 bzw. die damit erhältlichen Zusammensetzungen (Anspruch 9).

Zur Herstellung eines erfindungsgemäßen Sols wird mindestens ein Organosilan der allgemeinen Formel (A1)

R¹ ₐR² _{b}SiX_{(4-a-b)} (A1)

in der R¹ für einen nicht hydrolysierbaren Rest, R² für einen eine funktionelle Gruppe tragenden nicht hydrolysierbaren Rest und X für gleiche oder verschiedene Reste steht, die ausgewählt sind aus hydrolysierbaren Resten, der Hydroxylgruppe und hydrolysierbaren Substitutionsprodukten einer Hydroxylgruppe, wobei a und b unabhängig voneinander ganzzahlige Werte von 0 bis 3 annehmen können und a und b zusammen den Wert 1, 2 oder 3 haben, oder ein von R¹ abgeleitetes Oligomer, sowie gegebenenfalls
bis zu 70 Gew.-% eines Silans der allgemeinen Formel (A2)

SiX₄ (A2)

in der X die vorstehende Bedeutung hat,
und/oder mindestens einer hydrolysierbaren Verbindung (A3)
zu - gegebenenfalls modifizierten, im allgemeinen mindestens teilweise oligomeren - Silanolen (A) hydrolysiert bzw. polykondensiert.

### Siliciumverbindungen A1

Bei den erfindungsgemäßen Organosilanen der allgemeinen Formel (A1) handelt es sich um Siliciumverbindungen, die über zwei oder vorzugsweise drei hydrolysierbare Reste und einen oder zwei, vorzugsweise einen nicht-hydrolysierbaren Rest verfügen. In der Betrachtungsweise der Chemie der makromolekularen Verbindungen handelt es sich, ebenso wie bei den nachstehend beschriebenen Verbindungen A2 und A3 um polymerisierbare Monomere.

Sie weisen bevorzugt nicht-hydrolysierbare Reste (Substituenten) auf, die ihrerseits Epoxygruppen als funktionelle Gruppen tragen. Der einzige bzw. mindestens einer der beiden nicht-hydrolysierbaren Reste verfügt demnach über einen Epoxidring.

Beispiele für hydrolysierbare Reste X sind Halogen (F, Cl, Br und I, insbesondere Cl und Br), Alkoxy (insbesondere C₁₋₄-Alkoxy, wie z.B. Methoxy, Ethoxy, n-Propoxy, i-Propoxy und Butoxy), Aryloxy (insbesondere C₆₋₁₀-Aryloxy, z.B. Phenoxy), Acyloxy (insbesondere C₁₋₄-Acyloxy, wie z.B. Acetoxy und Propionyloxy) und Alkylcarbonyl (z.B. Acetyl). Besonders bevorzugte hydrolysierbare Reste sind Alkoxygruppen, insbesondere Methoxy und Ethoxy.

Beispiele für nicht-hydrolysierbare Reste R¹ im Sinne der Erfindung sind Alkyl, insbesondere C₁₋₄-Alkyl (wie z.B. Methyl, Ethyl, Propyl und Butyl), Alkenyl (insbesondere C₂₋₄-Alkenyl, wie z.B. Vinyl, 1-Propenyl, 2-Propenyl und Butenyl) , Alkinyl (insbesondere C₂₋₄-Alkinyl, wie z.B. Acetylenyl und Propargyl) und Aryl, insbesondere C₆₋₁₀-Aryl, wie z.B. Phenyl und Naphthyl), wobei die soeben genannten Gruppen gegebenenfalls einen oder mehrere Substituenten, wie z.B. Halogen und Alkoxy, aufweisen können. Auch Methacryl- und Methacryloxypropylreste verdienen in diesem Zusammenhang Erwähnung.

Spezielle Beispiele für die funktionellen Gruppen des Restes R² sind die insbesondere die Epoxygruppe und ferner z.B. mindestens eine Hydroxy-, Ether-, Amino-, Monoalkylamino-, Dialkylamino-, Amido-, Carboxy-, Mercapto-, Thioether-, Vinyl-, Acryloxy-, Methacryloxy-, Cyano-, Halogen-, Aldehyd-, Alkylcarbonyl-, Sulfonsäure- oder Phosphorsäuregruppe. Diese funktionellen Gruppen sind über Alkylen-, Alkenylen- oder Arylen-Brückengruppen, die durch Sauerstoff- oder Schwefelatome oder -NH-Gruppen unterbrochen sein können, an das Siliciumatom gebunden. Die genannten Brückengruppen leiten sich z. B. von den oben genannten Alkyl-, Alkenyl- oder Arylresten ab. Die Reste R¹ enthalten vorzugsweise 1 bis 18, insbesondere 1 bis 8 Kohlenstoffatome.

Bevorzugt enthalten die epoxy-substituierten Reste R² insbesondere eine Glycidyl- oder Glycidyloxygruppe. Beispiele für erfindungsgemäß einsetzbare Siliciumverbindungen A1 können z.B. den Seiten 8 und 9 der EP-A-195 493 entnommen werden.

Erfindungsgemäß besonders bevorzugte Siliciumverbindungen A sind diejenigen der allgemeinen Formel (I):

R₃SiR' (I)

in der die Reste R, verschieden oder vorzugsweise identisch, für eine hydrolysierbare Gruppe (vorzugsweise C₁₋₄-Alkoxy und insbesondere Methoxy und Ethoxy) stehen und R' für einen Glycidyloxy-(C₁₋₆)-Alkylen-Rest.

Wegen seiner leichten Verfügbarkeit wird erfindungsgemäß insbesondere γ-Glycidyloxypropyltrimethoxysilan eingesetzt (im folgenden abgekürzt GPTS).

### Silane A2

Als zusätzlich zur Siliciumverbindung A1 einsetzbare, vollständig hydrolysierbare Verbindungen (A2) der allgemeinen Formel SiX₄ eignen sich solche, deren hydrolysierbare Reste Halogen (F, Cl, Br und I, insbesondere Cl und Br), Alkoxy (insbesondere C₁₋₄-Alkoxy, wie z.B. Methoxy, Ethoxy, n-Propoxy, i-Propoxy und Butoxy), Aryloxy (insbesondere C₆₋₁₀-Aryloxy, z.B. Phenoxy) , Acyloxy (insbesondere C₁₋₄-Acyloxy, wie z.B. Acetoxy und Propionyloxy) und Alkylcarbonyl (z.B. Acetyl), Amino, Monoalkylamino, oder Dialkylamino mit vorzugsweise 1 bis 12, insbesondere 1 bis 6 Kohlenstoffatomen sind. Besonders bevorzugte hydrolysierbare Reste sind Alkoxygruppen, insbesondere Methoxy und Ethoxy.

Beispiele für Verbindungen A1 und A2, die eingesetzt werden können, sind im folgenden angegebenen, wobei diese jedoch keine Beschränkung der einsetzbaren Verbindungen darstellen sollen.
Si(OCH₃)₄, Si(OC₂H₅)₄, Si(O-n-C₃H₇)₄, Si(O-i-C₃H₇)₄, Si(OC₄H₉)₄, SiCl₄, HSiCl₃, Si(OOCCH₃)₄, H₃C-SiCl₃, CH₃-Si(OC₂H₅)₃, C₂H₅-SiCl₃, C₂H₅-Si(OC₂H₅)₃,
   C₃H₇-Si(OCH₃)₃, C₆H₅-Si(OC₂H₅)₃, (H₃CO)₃-Si-C₃H₆-Cl, (H₃C)₂SiCl₂, (H₃C)₂Si(OCH₃)₂, (H₃C)₂Si(OC₂H₅)₂, (H₃C)₂Si(OH)₂, (C₆H₅)₂SiCl₂, (C₆H₅)₂Si(OCH₃), (C₆H₅)₂Si(OC₂H₅)₂, (i-C₃H₇)₃SiOH;
H₂C=CH-Si(OOCCH₃)₃, H₂C=CH-SiCl₃, H₂C=CH-Si(OCH₃)₃,
   H₂C=CH-Si(OC₂H₅)₃, H₂C=CH-Si(OC₂H₄OCl₃)₃, H₂C=CH-CH₂-Si(OCH₃)₃,
   H₂C=CH-CH₂-Si(OC₂H₅)₃, H₂C=CH-CH₂-Si(OOCCH₃)₃,
   H₂C=C(CH₃)-COO-C₃H₇-Si(OCH₃)₃,
   H₂C=C(CH₃)-COO-C₃H₇-Si(OC₂H₅)₃.

Wie ersichtlich, können die Verbindungen (A1) auch nicht-hydrolysierbare Reste enthalten, die eine C-C-Doppel- oder Dreifach-Bindung aufweisen. Werden derartige Verbindungen eingesetzt, können der Zusammensetzung zusätzlich auch andere, olefinisch ungesättigte, radikalisch polymerisierbare (vorzugsweise epoxy- oder hydroxylgruppenhaltige) Monomere, wie z. B. Meth(acrylate) zugesetzt werden, die bei entsprechenden Bedingungen (vgl. die nachstehenden Hinweise) Vernetzungen eingehen können. Selbstverständlich können diese Monomeren auch über zwei oder mehr funktionelle Gruppen desselben Typs verfügen, wie z.B. bei Poly(meth)acrylaten von Polyolen; ebenso ist die Verwendung von Polyepoxiden möglich. Bei der thermischen oder photochemisch induzierten Härtung der entsprechenden Zusammensetzung findet dann zusätzlich zum Aufbau der organisch modifizierten anorganischen Matrix eine Polymerisation der organischen Spezies statt, wodurch die Vernetzungsdichte und somit auch die Härte der entsprechenden Überzüge und Formkörper zunimmt.

### Weitere hydrolysierbare Verbindungen A3

Schließlich gilt für alle obigen Zusammensetzungen, dass zusätzlich zu einer Siliciumverbindung (A1 sowie gegebenenfalls A2) eine oder mehrere andere hydrolysierbare Verbindungen (A3) eingesetzt werden können, die von anderen Zentralatomen als Silicium abgeleitet sind und ein anorganisches Netzwerk aufbauen können.

Als weitere hydrolysierbare Verbindungen (A3) eignen sich Verbindungen der Elemente aus der Gruppe Zn, Mg, Ti, Zr, Al, B, Sn und V, die zusammen mit den Verbindung (A1) und (A2) hydrolysiert werden können, also Verbindungen allgemein von Erdalkalimetallen und Erdmetallen sowie den sich ähnlich verhalten-den Elementen der Übergangsmetalle. Die Menge derartiger zusätzlicher Verbindungen (A3) sollte jedoch 70 Mol-% und insbesondere 50 Mol-% aller eingesetzten hydrolysierbaren Verbindungen nicht überschreiten, wobei besonders bevorzugt nicht mehr als 30 und insbesondere nicht mehr als 10 Mol-% aller eingesetzten hydrolysierbaren Verbindungen von der bzw. den Siliciumverbin-dung(en) A1 bzw. A1 und A2 verschieden sind.

Besonders bevorzugt sind z.B. Alkoholate von Ti, Zr oder Al, die vorzugsweise die allgemeine Formel (V) haben

M(OR''')ₘ (V)

worin M für Ti, Zr oder Al steht, R"' für eine Alkylgruppe mit vorzugsweise 1 bis 4 Kohlenstoffatomen (z.B. Methyl, Ethyl, Propyl, Isopropyl oder Butyl) steht und n den Wert 4 (M = Ti, Zr) oder 3 (M = Al) hat.

Eine Auswahl infragekommender Verbindungen der vorstehenden Gruppe A3 ist z.B. die folgende:
Al(OCH₃)₃, Al(OC₂H₅)₃, Al(O-n-C₃H₇)₃, Al(O-i-C₃H₇)₃, Al(OC₄H₉)₃,
   Al(O-i-C₄H₉)₃, Al(O-sek-C₄H₉)₃, AlCl₃, AlCl(OH)₂, Al(OC₂H₄OC₄H₉)₃;
TiCl₄, Ti(OC₂H₅)₄, Ti(OC₃H₇)₄, Ti(O-i-C₃H₇)₄, Ti(O-C₄H₉)₄, Ti(2-ethylhexoxy)₄;
ZrCl₄, Zr(OC₂H₅)₄, Zr(OC₃H₇)₄, Zr(O-C₄H₉)₄, ZrOCl₂, Zr(2-ethylhexoxy)₄ sowie Zr-Verbindungen, die komplexierende Reste aufweisen, wie z.B. β-Diketon-und Methacryl-Reste;
BCl₃, B(OCH₃)₃, B(OC₂H₅)₃, SnCl₄, Sn(OCH₃)₄;
Sn(OC₂H₅)₄;
VOCl₃, VO(OCH₃)₃.

Mindestens eine Siliciumverbindung A1 bzw. Siliciumverbindungen A1 und A2 sowie gegebenenfalls mindestens eine weitere hydrolysierbare Verbindung A3 wird bzw. werden gemeinsam, vorzugsweise unter Verwendung eines Katalysators hydrolysiert. Bei diesem Katalysator sollte es sich um einen sauren Katalysator handeln, da basische Katalysatoren gleichzeitig Kondensationskatalysatoren sind, was zur Folge hätte, dass die Sol-Eigenschaft der Bindemittel verlorenginge. Ein bevorzugter saurer Katalysator ist wässrige HCI. Dabei wird die Hydrolyse vorzugsweise so durchgeführt, dass pro Mol hydrolysierbarem Rest etwa ½ Mol Wasser verwendet, also ein größerer Überschuss an Wasser vermieden wird.

Unter dem Gesichtspunkt der makromolekularen Chemie sind die resultierenden Silanole (A) als Vorkondensate, d.h. Oligomere aufzufassen, die als wässrige Sole vorliegen und zeitweise stabil sind und weiterkondensiert, d.h. polykondensiert und dabei in der Regel vernetzt werden können. Danach sind sie wie zu erwarten, weitgehend unlöslich. Diese wissenschaftliche Betrachtungsweise soll jedoch die Erfindung in keiner Weise begrenzen.

Diesen wässrigen Solen von Silanolen (A) werden erfindungsgemäß Pigmente oder teilchenförmige Füllstoffe im weitesten Sinne ("Komponente C") zugesetzt, die größer sind als die bisher verwendeten "nanoskaligen" Teilchen. Die erfindungsgemäßen Teilchen haben einen mittleren Durchmesser, der größer ist als der von Kolloidteilchen, nämlich eine mittlere Partikelgröße von 500 µm oder mehr, also etwa gleich oder größer ist als die mittlere Wellenlänge des sichtbaren Lichts. Als mittlerer Teilchendurchmesser von Pigmenten, die nicht isometrisch sind, sondern in Form von kleinen Plättchen (wie z.B. gewisse Metallpigmente), Nadeln o.ä. vorliegen, soll der Durchschnittswert der längsten Achse gelten.

Die teilchenförmige Füllstoffe werden besonders vorteilhaft in Form von Vormischungen (in der Regel pastenförmigen oder doch viskosen Masterbatches) eingebracht werden, die eine Benetzung der Teilchen mit einem organischen Vermittler voraussetzen. Bestandteile solcher Vormischungen sind außer den Teilchen vor allem organische Polymere, wie z.B. Acrylpolymere, die möglicherweise als Vermittler wirken.

Durch den erfindungsgemäßen Einbau teilchenförmiger Pigmente lassen sich den angestrebten Gelen weitere Eigenschaften "aufsatteln". Die Schichten weisen körperliche Farben auf, sind also im allgemeinen opak (es sei denn, dass ihr Brechungsindex zufällig oder absichtlich mit dem des Polysiloxan-Grundkörpers identisch ist) und können in beliebiger Gestaltung eingesetzt werden. Damit haben sie ein Aussehen wie konventionelle Lackmaterialien. Im Gegensatz zu diesen ist jedoch die resultierende Trockenschichtdicke deutlich erniedrigt (ca. 10-15 µm, gegenüber 40 - 100 µm bei herkömmlichen Lacken, je nach Material).

Schließlich ist es zweckmäßig, wenn die weiterzukondensierenden Oligomeren (A) Glycidylreste aufweisen, an diese ein oder mehrere kondensationsfähige organische Verbindungen anzulagern, nämlich aromatische und/oder aliphatische Polyole (Komponente B) mit einem durchschnittlichen Molekulargewicht von nicht mehr als 1000 zuzusetzen, von denen die Vorstellung besteht (die aber die Erfindung nicht begrenzen soll), dass sie mit den Glycidylresten reagieren können und somit zusätzlich zu der Vernetzung über die Siloxanstruktur des Grundkörpers eine chemisch andersartige, zusätzliche Vernetzung bewirken.

Die erfindungsgemäß pigmentierten Zusammensetzungen haften sehr viel besser als konventionelle Materialien auf den Oberflächen. Zum Beispiel kann bei einer Aluminiumoberfläche auf die bisher übliche Chromatierung mit Chrom(VI)-Verbindungen verzichtet werden. Bei der Herstellung von Überzügen mit sog. Metallic-Lacken können also eine Mehrzahl von Arbeitsgängen eingespart werden: Anstelle von mehr als 10 Bädern bei der Chromatierung werden lediglich 2-3 Bäder für eine alkalische Vorreinigung/Entfettung und Aktivierung der Oberfläche benötigt:

| Konventioneller Lack | Erfindungsgemäße pigmentierte Schichten |
|---|---|
| 1. Chromatierung | Alkalische Vorreinigung |
| 2. Grundierung | Entfällt |
| 3. Metallic-Lack | Metallic-Lack |
| 4. Klarlack | Entfällt |

Metallic-Lacke werden in einer Schicht und einem Arbeitsgang appliziert und anschließend eingebrannt. Selbst der Glanzgrad der Beschichtung kann in einer einzigen Schicht genau eingestellt werden, ohne zusätzliche Klarlackschicht.

Durch den Einbau der Aluminiumpigmentierung wird ein erhöhter Korrosionsschutz erhalten. Die Flexibilität der Beschichtung nach der Aushärtung ist gegenüber den unpigmentierten Stoffen verbessert, wie mit dem Dorn-Biegeversuch gezeigt werden kann.

Wegen der i.d.R. dünneren Schicht und des erhöhten Festkörperanteils des Beschichtungsstoffes ist der Lackverbrauch vermindert (Umwelt) und die Lösemitte-lemissionen verringert.

Um die Organosiloxane (Organosilanole) ihrerseits zur Aufnahme der Pigmente vorzubereiten, ist es zweckmäßig und erfindungsgemäß bevorzugt, bestimmte, Epoxidgruppen enthaltende Organosilanole zu verwenden.

Die Erfindung betrifft daher weiter ein Verfahren zur Herstellung von Zusammensetzungen auf der Basis von speziellen hydrolysierbaren Silanen mit Epoxidgruppen, die dadurch erhältlichen Zusammensetzungen und deren Verwendung. Insbesondere betrifft die vorliegende Erfindung ein Verfahren zur Herstellung von derartigen Zusammensetzungen für Beschichtungen und Formkörper mit variablen Eigenschaften.

### Aromatische Polyole B

Erfindungsgemäß eingesetzte aromatische Polyole (B) weisen ein durchschnittliches Molekulargewicht von höchstens 1000 auf. Beispiele für derartige aromatische Polyole sind z.B. Polyphenylenether, die an mindestens zweien der Phenylringe Hydroxygruppen tragen, sowie allgemein Verbindungen, in denen zwei aromatische Ringe durch eine Einfachbindung, gegebenenfalls substituiertes, lineares oder verzweigtes Alkylen ―O―, ―CO―, ―SO₂― usw. miteinander verbunden sind und mindestens (und vorzugsweise) eine Hydroxygruppe an jeder aromatischen Gruppe aufweisen sowie deren Oligomere.

Besonders bevorzugte aromatische Polyole sind demnach aromatische Diole. Unter diesen aromatischen Diolen sind besonders bevorzugt Verbindungen mit den allgemeinen Formeln (II) und (III): 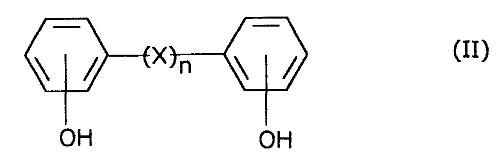 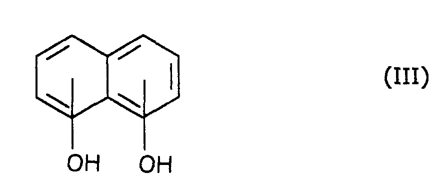 worin X für einen (C₁-C₈)-Alkylen- oder Alkyliden-Rest, einen (C₆-C₁₄)-Arylenrest, ―O―, ―S―, ―CO― oder ―SO₂― steht und n gleich 0 oder 1 ist;

Bevorzugte Bedeutungen für X in Formel (II) sind C₁-C₄-Alkylen oder -Alkyliden, insbesondere ―C(CH₃)₂― und ―SO₂―. In den Verbindungen der Formeln (II) und (III) können die aromatischen Ringe neben den OH-Gruppen noch bis zu 4 bzw. 3 weitere Substituenten, wie z.B. Halogen, Alkyl und Alkoxy tragen.

Konkrete Beispiele für Verbindungen der Formel (II) und (III) sind Bisphenol A, Bisphenol S und 1,5-Dihydroxynaphthalin. Unter diesen wird Bisphenol A erfindungsgemäß besonders bevorzugt.

In den Zusammensetzungen für korrosionsinhibierende Beschichtungen wird das Polyol (Diol) in der Regel in solchen Mengen eingesetzt, dass pro Mol Epoxidring aus der Siliciumverbindung (A) 0,2 bis 1,5 Mol Hydroxylgruppen aus dem aromatischen Polyol (B) anwesend sind. Vorzugsweise sind pro Mol Epoxidring 0,3 bis 1,2, besonders bevorzugt 0,6 bis 1 Mol Hydroxylgruppen aus dem Polyol (B) vorhanden, wobei der optimale Wert bei 0, 8 Mol OH pro Mol Epoxy liegt. Werden statt aromatischen Diolen aromatische Polyole mit mehr als zwei OH-Gruppen eingesetzt, werden die entsprechenden Materialien spröder, dafür aber auch härter.

Zu erwähnen wäre auch noch, dass sich der Brechungsindex der entsprechenden korrosionsinhibierenden Beschichtungen nicht nur durch die Konzentration und Art der teilchenförmigen Materialien (C) (falls diese eingesetzt werden), sondern auch über die Auswahl des entsprechenden aromatischen Polyols steuern lässt. So weist z.B. eine Beschichtung unter Verwendung von Bisphenol S einen höheren Brechungsindex auf als eine Beschichtung auf der Basis von Bisphenol A. Dieser Umstand spielt allerdings bei den erfindungsgemäß mit einem Pigment gefüllten Zusammensetzungen nur eine untergeordnete Rolle.

Durch geeignete Auswahl und gegebenenfalls geeignete Kombination der obigen Komponenten (A) bis (C), sowie weiterer Komponenten (D, E... vgl. unten) können den Überzügen und Formkörpern aus den entsprechenden Zusammensetzungen die oben erwähnten Eigenschaften alternativ oder kumulativ verliehen werden.

Insbesondere führt die Kombination des teilchenförmigen Materials (C) mit der hydrolysierten Siliciumverbindung (Silanol; A) zu einer Zusammensetzung für hochkratzfeste Beschichtungen und Formkörper. Die erfindungsgemäßen Zusammensetzungen können auch zu dickeren Schichten bis hin zu Formkörpern verarbeitet werden, ohne dass der Bereich der Erfindung verlassen wird.

Schließlich führt die Kombination aus vorhydrolysierter Siliciumverbindung (A) und aromatischem Polyol (B) zu einer Zusammensetzung für korrosionsinhibierende Beschichtungen.

Selbstverständlich können jeweils mehrere der Spezies (A, bzw. A1, A2 und/oder A3), gegebenenfalls (B) und (C) vorhanden sein bzw. verwendet werden.

Im Falle der Zusammensetzung für korrosionsinhibierende Beschichtungen führt die Einverleibung des teilchenförmigen Materials (C) zu einer höheren Kratzfestigkeit des entsprechenden Überzugs.

Weiter kann den Zusammensetzungen für hochkratzfeste und korrosionsinhibierende Beschichtungen zusätzlich in an sich bekannter Weise eine hydrolysierbare Siliciumverbindung mit mindestens einem nicht hydrolysierbaren Rest einverleibt werden, der 5 bis 30 Fluoratome an Kohlenstoffatome gebunden aufweist, die durch mindestens zwei Atome von Si getrennt sind. Die Verwendung eines derartigen fluorierten Silans führt dazu, dass dem entsprechenden Überzug zusätzlich hydrophobe und oleophobe (schmutzabweisende) Eigenschaften verliehen werden. Eine allgemeine Beschreibung dieser fluormodifizierten Siloxanpolymeren ist in dem bereits erwähnten Dokument WO 97/20005 zu finden.

Besonders im Falle der Zusammensetzungen für hydrophile Beschichtungen und Formkörper und korrosionsinhibierende Beschichtungen ist es weiterhin bevorzugt, zusätzlich eine Lewis-Base (D) oder ein Alkoholat (E) von Ti, Zr oder Al als Katalysator für die Epoxid-Epoxid- bzw. Polyol-Epoxid-Vernetzung einzusetzen.

### Teilchenförmiges Material C

Erfindungsgemäß ist der mittlere Teilchendurchmesser der temperaturbeständigen Pigmente oder teilchenförmigen Füllstoffe (C) mindestens 0,5, bevorzugt 0,5 bis 10 µm (500, bzw. 500 bis 10 000 nm).

Als Pigmente eignet sich eine breite Skala von Materialien.

### Genannt seien beispielsweise:

| | |
|---|---|
| Weißpigmente | Titandioxid, Zinkoxid, Zinksulfid und Lithopone |
| Schwarzpigmente | Ruß (Gasruße, Furnace-Ruße, Flammruße), Eisenoxidschwarz (Magnetit), Spinellschwarz |
| Blaupigmente | Kupferphthalocyanine, Eisencyanblau (Miloriblau, Berliner Blau), Ultramarinblau, Spinellblau (Kobaltblau), Indanthronblau |
| Violettpigmente | Dioxazinviolett |
| Grünpigmente | Chromgrün und Chromechtgrün, Chromoxidgrün, Spinellgrün (Kobaltgrün), Phthalocyaningrün |
| Gelbpigmente | Eisenoxidgelb, Bleichromat (Chromgelb), Wismutvanadat/ -Molybdat, Nickel- und Chromtitangelb, Gelbe Azo-Pigmente, Gelbe Carbonylpigmente, Gelbe Metallkomplex-Pigmente |
| Rot/Orangepigmente | Eisenoxidrot, Molybdatrot, Rote Azo-Pigmente, Rote Carbonylpigmente, Chinacridone, Perylene, Diketo-pyrrolopyrrol Pigmente (DPP-Pigmente) |
| Effektpigmente | Eisenglimmer, Goldbronzen, Perlglanzpigmente, Tagesleuchtpigmente |
| Metallpigmente | Aluminiumpulver, Zinkstaub |
| Schutzpigmente gegen Korrosion | Bleimennige, Chromate, Phosphate |

Als Füllstoffe eignet sich eine breite Skala von Materialien.

### Genannt seien beispielsweise:

| | |
|---|---|
| Erdalkalisulfate | Bariumsulfat, Calciumsulfat |
| Erdalkalicarbonate | Calciumcarbonat |
| Magnesiumsilikate | Talkum |
| Aluminiumsilikate | Kaolin, Glimmer |
| Kieselsäure | natürliche Guarzmehle |
| Fasern | Glasfasern |
| Mikrohohlkugeln | kugelförmige Hohkörper aus Glas oder einem anderen Silikatmaterial |
| Polyamid-Pulver | Polyamid-11 oder Polyamid-12 |

### Graphit

Die Pigmente und Füllstoffe werden erfindungsgemäß bevorzugt in Form von vorbehandelten, vorzugsweise pastenförmigen Vormischungen eingesetzt, die teilweise als Handelsprodukte erhältlich sind und deren Herstellverfahren weitgehend bekannt sind. Soweit nicht handelsüblich, können sie z.B. auf die nachstehend am Beispiel der Aluminiumpigmente skizzierte Weise erhalten werden:

Aluminiumpigmente werden durch Vermahlung von runden Aluminiumkörnern in Kugelmühlen in Gegenwart von überwiegend aliphatischen Lösemitteln hergestellt, wobei pastenförmige Konzentrate erhalten werden. Zur Vermeidung von "Kaltverschweißung" der Al-Blättchen erfolgt die Vermahlung in Gegenwart von "Schmiermitteln" (z. B. Stearinsäure, Ölsäure), die an der Metalloberfläche absorbiert werden und das Ausschwimmen der Pigmente verhindern. Es existieren verschiedene Typen von Al-Pigmenten (Leafing- und NonLeafing-Typen) und Pigmente mit unterschiedlicher Oberflächenbehandlung durch dünnschichtige Beschichtungen (Einstellen der Hydrophilie/Hydrophobie). Derartige Pasten können von verschiedenen Herstellern (z.B. Eckart-Werke, Schlenck) als kommerzielle Produkte bezogen werden.

Pigmentpasten, die mit den erfindungsgemäß verwendeten Polysiloxanen ohne Phasenseparation verträglich sind, sind handelsüblich. Soweit bekannt, werden die entsprechenden Weiß- oder Buntpigmente oder Füllstoffe unter hoher Scherung (Kugelmühle, Perlmühle, Dreiwalze etc.) unter Beigabe gewisser Acrylharze dispergiert, bis sie komplett benetzt sind. Derartige Pasten können von verschiedenen Herstellern bezogen werden. Der Pigmentanteil variiert je nach Pigmentart (Typische Handelsprodukte enthalten zum Beispiel: Titandioxid: 60%; Flammruß: 18%; Phthalocyaninblau: 12 oder 20%; Eisenoxidrot: 58%). Der Acrylatanteil liegt zwischen 25 - 45 %. Der Rest besteht aus verschiedenen Lösemitteln (2-Methoxy-Methylethylacetat; Xylol, Ethylbenzol, Lösungsmittelnaphtha.)

Perlglanz-Pigment-Pasten enthalten nicht-metallische Effektpigmente aus transparenten Blättchen mit hoher Brechzahl. Es handelt sich meist um synthetische Produkte aus Glimmer, auf dem eine oder mehrere Schichten von Metalloxiden aufgebracht sind. Die Pigmentpasten bestehen aus dem Pigment (15 - 60 %) und einem Hilfsbindemittel in unterschiedlicher Konzentration wie Nitrocellulose (0 - 10 %), Alkydharz (0 - 15 %), Acrylharz (0 - 1 %), Dibutylphthalat (0 - 60 %), Lösemittel wie Amylacetat (0 - 30 %), Isopropanol (0 - 5 %), Xylol, Toluol, Butylacetat (0 - 35 %). Handelsprodukte bietet beispielsweise die Firma The Mearl Corporation, USA an.

### Lewis-Base D

Die Überführung der Sole in Gele geschieht bevorzugt mittels gewisser Stickstoffverbindungen, die insbesondere in den Zusammensetzungen für hydrophile und korrosionsinhibierende Materialien eingesetzt werden ("Amin-Härter"; Lewis-Basen). Derartige Stickstoffverbindungen können z.B. ausgewählt werden aus N-Heterocyclen, Aminogruppen enthaltenden Phenolen, polycyclischen Aminen und Ammoniak (vorzugsweise als wässrige Lösung) . Beispiele sind 1-Methylimidazol, 2-(N,N-Dimethylaminomethyl)phenol, 2,4,6-Tris(N,N-dimethylaminomethyl)phenol und 1,8-Diazabicyclo[5.4.0]-7-undecen. Besonders bevorzugt wird 1-Methylimidazol verwendet. Die Anwesenheit der Lewis-Base beschleunigt außerdem die Vernetzung der Gele über die mit Polyolen vernetzungsfähigen Epoxygruppen, wenn diese verwendet werden.

Eine weitere Klasse von stickstoffhaltigen Lewis-Basen (D), die erfindungsgemäß eingesetzt werden können, sind hydrolysierbare Silane, die über mindestens einen nicht-hydrolysierbaren Rest verfügen, der mindestens eine primäre, sekundäre oder tertiäre Aminogruppe umfaßt. Derartige Silane können zusammen mit der Siliciumverbindung A hydrolysiert werden und stellen dann eine in das organisch modifizierte anorganische Netzwerk eingebaute Lewis-Base dar. Bevorzugte stickstoffhaltige Siliciumverbindungen haben die allgemeine Formel (IV):

R₃SiR" (IV)

worin die Reste R definiert sind wie für die Verbindungen (A1), und R" für einen an Si gebundenen, nicht-hydrolysierbaren Rest steht, der mindestens eine primäre, sekundäre oder tertiäre Aminogruppe umfaßt. Beispiele für Siliciumverbindungen der Formel (IV) sind 3-Aminopropyltrimethoxysilan, 3-Aminopropyltriethoxysilan, N-(2-Aminoethyl)-3-aminopropyltrimethoxyysilan, N-[N-(2-Aminoethyl)-2-aminoethyl]3-aminopropyltrimethoxysilan und N-[3-(Triethoxysilyl)propyl)]-4,5-dihydroimidazol.

Die Lewis-Base wird, wenn die Siliciumverbindung (A1) Epoxygruppen aufweist, in den entsprechenden Zusammensetzungen im allgemeinen in einer Menge von 0,01 bis 0, 5 Mol pro Mol Epoxygruppe der Siliciumverbindung (A1) eingesetzt. Bevorzugt sind Mengen im Bereich von 0,02 bis 0,3 und insbesondere 0,05 bis 0,1 Mol Lewis-Base pro Mol Epoxygruppe.

Zur weiteren Modifizierung der erfindungsgemäßen Zusammensetzungen können fluorhaltige Siliciumverbindungen (E) eingesetzt werden. Solche Zusammensetzungen ergeben nicht nur hochkratzfeste und korrosionsinhibierende Beschichtungen, sondern wirken darüber hinaus hydrophob und gleichzeitig oleophob. Diese Silane (E) verfügen über mindestens einen nicht-hydrolysierbaren Rest, der 5 bis 30 Fluoratome an Kohlenstoffatome gebunden aufweist, die durch mindestens zwei Atome von Si getrennt sind. Derartige Silane werden in der DE-OS 41 18 184 detailliert beschrieben. Beispiele sind die folgenden:
C₂F₅CH₂-CH₂-SiY₃
n-C₆F₁₃CH₂CH₂SiY₃
n-C₈F₁₇CH₂CH₂SiY₃
n-C₁₀F₂₂CH₂CH₂SiY₃
(Y = OCH₃, OC₂H₅ oder Cl)
i-C₃F₇O-(CH₂)₃-SiCl₂(CH₃)
n-C₆F₁₃CH₂CH₂ SiCl₂(CH₃)
n-C₆F₁₃CH₂CH₂ SiCl(CH₃)₂

Diese fluorierten Silane werden im allgemeinen in einer Menge von 0,1 bis 15, vorzugsweise 0,2 bis 10 und besonders bevorzugt 0,5 bis 5 Gew.-%, bezogen auf den Feststoffgehalt der organisch modifizierten anorganischen Matrix, eingesetzt.

Es sei erwähnt, dass die Verwendung von Siliciumverbindungen (A), die über mindestens zwei Epoxidgruppen verfügen, in den erfindungsgemäßen Zusammensetzungen zu Beschichtungen und Formkörpern mit verbesserter Widerstandsfähigkeit gegen Kondenswasser führt. Die Herstellung der erfindungsgemäßen Zusammensetzung erfolgt auf diesem Gebiet übliche Art und Weise. Vorzugsweise wird zunächst die hydrolysierbare Siliciumverbindung (A) vorzugsweise unter Verwendung eines sauren Katalysators und bei Raumtemperatur hydrolysiert, wobei, wie erwähnt, vorzugsweise etwa ½ Mol H₂O pro Mol hydrolysierbare Gruppe eingesetzt wird. Daran schließt sich dann die Zugabe der anderen Komponenten in beliebiger Reihenfolge an. Das teilchenförmige Material (C) kann bereits während der Hydrolyse zugegen sein.

Werden neben den relativ reaktionsträgen Siliciumverbindungen auch reaktionsfähigere Verbindungen (A3) eingesetzt, wie z.B. solche von Ti, Zr und Al, empfiehlt es sich, das Wasser schrittweise und/oder unter Eiskühlung zuzugeben und/oder Verbindungen einzusetzen, die in ihrer Reaktionsfähigkeit beschränkt worden waren. ein Beispiel für solche Verbindungen ist Al(OCH₂CH₂OC₄H₉)₃).

Zur Einstellung der rheologischen Eigenschaften der Zusammensetzungen können diesen bei Bedarf Lösungsmittel auf irgendeiner Stufe der Herstellung zugesetzt werden (vorzugsweise handelt es sich bei diesen Lösungsmitteln um bei Raumtemperatur flüssige Alkohole, die im übrigen auch bei der Hydrolyse der bevorzugt eingesetzten Alkoxide der betreffenden Elemente entstehen) , wobei diese Alkohole zusätzlich Ethergruppen enthalten können.

Weiter könnenden erfindungsgemäßen Zusammensetzungen die üblichen Additive zugesetzt werden, wie (lösliche) Färbemittel, Verlaufshilfsmittel, Tenside, Stabilisatoren gegen den Einfluss kurzwelligen Lichts, Photoinitiatoren, Photosensibilisatoren (wenn eine photochemische Härtung der Zusammensetzung beabsichtigt ist) und thermische Polymerisationskatalysatoren. Zusammensetzungen, mit denen Beschichtungen hergestellt werden sollen, können auf das Substrat mit Standard-verfahren aufgebracht werden wie Tauchen, Streichen, Bürsten, Rakeln, Walzen, Sprayen und Schleudern.

Die üblicherweise anschließende Härtung der Gele kann, gegegenenfalls nach vorheriger Abtrocknung bei Raumtemperatur (zur teilweisen Entfernung des Lösungsmittels) wie üblich geschehen. Vorzugsweise geschieht dies thermisch bei Temperaturen im Bereich von 50 bis 300°C, insbesondere 70 bis 200°C und besonders bevorzugt 90 bis 130°C, gegebenenfalls unter vermindertem Druck. Wenn ungesättigte Verbindungen und Photoinitiatoren mitverwendet worden waren, kann auch eine Härtung durch Bestrahlung erfolgen, an die sich gegebenenfalls eine thermische Nachhärtung anschließt.

Die erfindungsgemäßen Zusammensetzungen eignen sich insbesondere zur Beschichtung, wobei die Schichtdicken z.B. 1 bis 30, insbesondere 3 bis 15 µm betragen. Es versteht sich, dass die Mindestschichtdicke auf die Teilchengröße der Komponente (C) abgestimmt werden muß.

Die nachstehenden Beispiele sollen die Erfindung weiter erläutern, ohne jedoch deren Umfang zu beschränken. Sie verwenden einheitlich ein aus zwei Komponenten bestehendes Sol-Gel-Grundsystem mit einem aromatischen Polyol und einem Härter (Aminkomponente), das erfindungsgemäß besonders bevorzugt wird. Das Sol-Gel-Grundsystem ist eine durch Hydrolyse von γ-Glycidyloxypropyltrimethoxysilan (GPTS) mit 0,1 molarer HCI, Bisphenol-A als Polyol, evt. einem Lösemittel und einem Zusatz, der den Verlauf verbessert (hier: polyethermodifiziertes Silicon; Produkt: z. B. Byk® 306) erhaltene Zusammensetzung.

### Stammkomponente:

535,0 g γ-Glycidyloxypropyltrimethoxysilan (GPTS) werden im Ansatzgefäß vorgelegt und unter Rühren mit 61,5 g HCI (0,1 molar) versetzt. Bei der exothermen Reaktion erwärmt sich der Ansatz innerhalb weniger Minuten und wird einphasig. Nach 10 Minuten werden 203,5 g Bisphenol-A langsam zugegeben und unter weiterem Rühren gelöst. Die Stammkomponente ist wasserklar und leicht viskos.

### Härterkomponente:

In 188,8 g Butylglykol werden 6,3 g 1-Methylimidazol sowie zur Verbesserung von Verlauf und Oberflächenhärte 4,9 g eines polyethermodifizierten Silikons gelöst, das beispielsweise unter dem Handelsnamen Byk 306 erhältlich ist.

### Verarbeitung:

Zur Herstellung eines transparenten Beschichtungsstoffes werden Stammkomponente und Härterkomponente im Massenverhältnis 4 : 1 zusammengegeben und durch Rühren homogenisiert. Zum Einstellen der Verarbeitungsviskosität (Z. B. für Spritzapplikation) kann mit einem polaren Lösemittel (z. B. Ethylacetat, Butylacetat) verdünnt werden. Nach der Applikation erfolgt die Aushärtung des Beschichtungsmaterials durch Einbrennen: 15 Minuten bei 180°C (im Durchlaufofen), 45 Minuten bei 130°C oder 60 Minuten bei 100°C. Seine volle Belastbarkeit erreicht die ausgehärtete Beschichtung nach 2 Tagen Nachhärtung bei Raumtemperatur.

### Beispiel 1:

### Sol-Gel-Grundsystem; Aluminium-Pigment

16 g Stammkomponente werden mit 5 g Butylacetat verdünnt. Dazu werden 1,5 g eines Hilfsmittels gegeben, das die Dispergierung verbessert. Geeignet ist z.B. eine 38 %ige Lösung hochmolekularer Block-Copolymerer mit pigmentaffinen Gruppen, die unter der Bezeichnung Disperbyk 163 im Handel ist oder eine 50 %ige Lösung eines Salzes ungesättigter Polyaminamide und niedermolekularer saurer Polyester, Handelsprodukt Anti-Terra-U). Die Pigmentierung erfolgt durch Zugabe von 4,5 g einer handelsüblichen Aluminiumpaste (Beispiele für Handelsprodukte sind etwa: Stapa Hydrolux 400; Stapa Metallux 2196; Metalure L 55700). Die Paste wird durch Rühren mit geringer Scherung im Ansatz verteilt. Vor der Verarbeitung werden der pigmentierten Stammkomponente 4 g Härterkomponente zugesetzt, durch Rühren homogenisiert. Verarbeitung/Applikation und Aushärtung wie vorstehend beschrieben.

Zur besseren Ausrichtung der Aluminiumteilchen in der Beschichtung (Anordnung der scheibchenförmigen Metallflitter parallel zur Oberfläche) können dem beschriebenen Ansatz 16 g 20%ige Cellulose-Acetobutyrat (CAB)-Lösung zugegeben werden.Hierzu werden 100 g Cellulose-Acetobutyrat langsam unter Rühren zu einer Mischung aus 175 g Butylacetat und 225 g Xylol zugegeben, bis das CAB gänzlich gelöst ist.

### Beispiel 2:

### Sol-Gel-Grundsystem; Perlglanz-Pigment mit Pigmentpaste (Silber-Metallic Effekt)

160 g Stammkomponente werden mit 50 g Butylacetat verdünnt. Dazu werden 15 g des vorstehend erwähnten Disperbyk 163 oder Anti-Terra-U gegeben. Pigmentiert wird durch Zugabe von 10 g Pigmentpaste (etwa Mearlin Nu-antique Silver 9110AB, Hersteller The Mearl Corporation). Die Paste wird durch Rühren mit hohher Geschwindigkeit und niedrigen Scherkräften verteilt. Dazu werden zur Verarbeitung 40 g Härterkomponente gegeben und unter Rühren homogenisiert. Die Einstellung der Spritzviskosität erfolgt durch Zugabe von Butylacetat, Verarbeitung/Applikation und Aushärtung wie in Beispiel 1

### Beispiel 3:

### Sol-Gel-Grundsystem; verschiedene Buntpigmente (z.B.: Feuerrot; RAL 3000)

Zu 160 g Stammkomponente werden 10,8 g Dispergieradditiv (50 %ige Lösung eines Alkylammoniumsalzes einer Polycarbonsäure, Bsp: Anti-Terra® -203) gegeben. Unter Rühren werden hierzu 1,86 g Permanent FGR 70, 0,51 g Bayferrox® -Gelb 3910, 0,19 g Bayferrox-rot 130 M, 0,32 g Titandioxid R 211 und 13,1 g Talkum 20 M 2 gegeben. Der Ansatz wird 10 Minuten mit hoher Scherkraft dispergiert und dann in einer Perlmühle bis zu einer Kornfeinheit von 5 um vermahlen. Hierzu werden 50 g Butylacetat gegeben. Dazu werden zur Verarbeitung 40 g Härterkomponente gegeben und unter Rühren homogenisiert. Die Einstellung der Spritzviskosität erfolgt durch Zugabe von Butylacetat. Verarbeitung/Applikation und Aushärtung wie in Beispiel 1.

### Beispiel 4:

### Sol-Gel Grundsystem; Aluminium-Pigmente, zusätzlich Buntpigmentierung (Bsp: Feuerrot; RAL 3000-Metallic)

Zu 200 g Stammkomponente werden 10,8 g Dispergieradditiv (50 %ige Lösung eines Alkylammoniumsalzes einer Polycarbonsäure, Bsp: Anti-Terra-203) gegeben. Unter Rühren werden hierzu 1,86 g Permanent FGR 70, 0,51 g Bayferrox-Gelb 3910, 0,19 g Bayferrox-rot 130 M, 0,32 g Titandioxid R 211 und 13,1 g Talkum der Sorte 20 M 2 gegeben. Der Ansatz wird 10 Minuten bei hoher Scherkraft dispergiert und dann in der Perlmühle bis zu einer Kornfeinheit von 5 um gemahlen. Hierzu werden 62,5 g Butylacetat und 6,25 g Aluminiumpaste (Beispiel: Stapa Hydrolux 400; Stapa Metallux 2196; Metalure L 55700) gegeben. Die Paste wird durch Rühren nach der Empfehlung des Herstellers (Vermeidung allzuhoher Scherkräfte) im Ansatz verteilt

Dazu werden zur Verarbeitung 50 g Härterkomponente gegeben und unter Rühren homogenisiert. Die geeignete Spritzviskosität wird durch Zugabe von Butylacetat eingestellt. Verarbeitung/Applikation und Aushärtung wie in Beispiel 1.

Zum besseren Ausrichten der Aluminiumpigmente im Beschichtungsstoff können dem beschriebenen Ansatz 200 g 20%ige CAB-Lösung zugegeben werden.

### Beispiel 5:

### Sol-Gel Grundsystem; Buntpigmentierung (Farbton: Hellblau)

160 g Stammkomponente werden mit 50 g Butylacetat verdünnt. Dazu werden 15 g Dispergieradditiv (38 %ige Lösung hochmolekularer Block-Copolymerer mit pigmentaffinen Gruppen; Beispiel: Disperbyk 163 oder 50 %ige Lösung eines Salzes ungesättigter Polyaminamide und niedermolekularer saurer Polyester (Beispiel: Anti-Terra-U) gegeben. Pigmentierung durch Zugabe von 8 g blauer Pigmentpaste (Beispiel: Lanco-Beit UN 565) und 8 g weißer Pigmentpaste (Beispiel: Lanco-Beit UN 161). Die Paste wird durch Rühren mit niedriger Scherkraft verteilt. Zur Verarbeitung werden 40 g Härterkomponente zugesetzt und unter Rühren homogenisiert. Die geeignete Spritzviskosität wird durch Zugabe von Butylacetat eingestellt. Verarbeitung/Applikation und Aushärtung wie im vorangestellten Herstellbeispiel beschrieben.

### Beispiel 6:

### Sol-Gel Grundsystem; Aluminium-Pigment + Buntpigmentierung (Blau-Metallic)

160 g Stammkomponente werden mit 50 g Butylacetat verdünnt. Dazu werden 15 g Dispergieradditiv (38 %ige Lösung hochmolekularer Block-Copolymerer mit pigmentaffinen Gruppen; Beispiel: Disperbyk 163 oder 50 %ige Lösung eines Salzes ungesättigter Polyaminamide und niedermolekularer saurer Polyester (Beispiel: Anti-Terra-U) gegeben. Pigmentiert wird durch Zugabe von 6 g blauer Pigmentpaste (Beispiel: Lanco-Beit UN 565), 6 g weißer Pigmentpaste (Beispiel: Lanco-Beit UN 161) und 6,25 g Aluminiumpaste (Beispiel: Stapa Hydrolux 400; Stapa Metallux 2196; Metalure L 55700). Die Pasten werden durch Rühren mit niedriger Scherkraft im Ansatz verteilt

Zur Verarbeitung werden 40 g Härterkomponente zugegeben und unter Rühren homogen verteilt. Die geeignete Spritzviskosität wird durch Zugabe von Butylacetat eingestellt. Verarbeitung/Applikation und Aushärtung wie in Beispiel 1.

Zur besseren Ausrichtung der Aluminiumteilchen parallel zur Oberfläche der Beschichtung können dem beschriebenen Ansatz 16 g 20%ige CAB-Lösung zugegeben werden.

### Beispiel 7:

### Sol-Gel Grundsystem mit einem Periglanz-Pigment mit einer handelsüblichen Pigmentpaste zur Erzielung eines silbrig-metallisch gänzenden Überzugs

160 g der Stammkomponente des Herstellbeispiels 1 werden mit 50 g Butylacetat verdünnt. Dazu werden 15 g Dispergieradditiv (38 %ige Lösung hochmolekularer Block-Copolymerer mit pigmentaffinen Gruppen (Beispiel Disperbyk 163 oder 50 %ige Lösung eines Salzes ungesättigter Polyaminamide und niedermolekularer saurer Polyester, Beispiel Anti-Terra-U) gegeben. Die Pigmentierung erfolgt durch Zugabe von 10 g Pigmentpaste (Beispiel: Mearlin Nu-antique Silver 91 IOAB, The Mearl Corporation) zum Ansatz. Die Paste wird durch Rühren mit hoher Geschwindigkeit und niedrigen Scherkräften im Ansatz verteilt. Dazu werden zur Verarbeitung 40 g Härterkomponente gegeben und unter Rühren homogenisiert. Die geeignete Spritzviskosität wird durch Zugabe von Butylacetat eingestellt. Verarbeitung/Applikation und Aushärtung wie in Beispiel 1.

## Patentansprüche

1. Verfahren zur Herstellung von vorzugsweise opaken, Pigmente oder Füllstoffe enthaltenden Zusammensetzungen, insbesondere Beschichtungen, auf der Grundlage von Polysiloxanen mittels des Sol-Gel-Prozesses, wobei man in einem ersten Schritt durch Umsetzen von Silanen mit Metall-Alkoxiden erhältliche Organosilane (Alkoxysilane) zu einem Sol hydrolysiert und das zeitweise stabile, kondensationsfähige wässrige Sol von meist oligomeren Organosilanolen in einem zweiten Schritt in ein Gel überführt, **dadurch gekennzeichnet, dass** man Epoxygruppen enthaltende Silane einsetzt und Pigmente oder Füllstoffe eines mittleren Teilchendurchmessers von mindestens 500 nm.

2. Verfahren zur Herstellung von Zusammensetzungen auf der Grundlage von hydrolysierbaren Silanen mit Epoxidgruppen nach Anspruch 1, **dadurch gekennzeichnet, dass** man zu mindestens einer hydrolysierbaren oder bereits vorhydrolysierten Siliciumverbindung (A) mit mindestens einem hydrolytisch nicht abspaltbaren, direkt an Silicium gebundenen Rest, der über eine Epoxygruppe verfügt, mindestens einen Füllstoff B, ausgewählt aus anorganischen oder organischen Pigmenten oder Füllstoffen mit einer durchschnittlichen Teilchengröße von mindestens 500 nm und ein aromatisches Polyol mit einem durchschnittlichen Molgewicht von höchstens 1000 gibt, gegebenenfalls hydrolysiert und unter Wasserentzug aushärtet.

3. Verfahren nach Anspruch 1, **dadurch gekennzeichnet, dass** man zur Herstellung des Sols
a) mindestens ein Organosilan der allgemeinen Formel (A1)
R¹ ₐR² _{b}SiX_{(4-a-b)} (A1)
in der R¹ für einen nicht hydrolysierbaren Rest, R² für einen eine funktionelle Gruppe tragenden, nicht hydrolysierbaren Rest und X für gleiche oder verschiedene Reste steht, die ausgewählt sind aus der Hydroxylgruppe und hydrolysierbaren Substitutionsprodukten einer Hydroxylgruppe, wobei a und b unabhängig voneinander ganzzahlige Werte von 0 bis 3 annehmen können und a und b zusammen den Wert 1, 2 oder 3 haben, oder ein davon abgeleitetes Oligomer,
b) gegebenenfalls ein Silan der allgemeinen Formel (A2)
SiX₄ (A2)
in der X die vorstehende Bedeutung hat, sowie
c) gegebenenfalls eine oder mehrere andere hydrolysierbare Verbindungen (A3), deren Zentralatome von Silicium verschieden sind, insbesondere aus der Gruppe Ti, Zr, Al, B, Sn und V, die zusammen mit der Verbindung (A1) hydrolysiert werden und ein anorganisches Netzwerk aufbauen können, zu einem - gegebenenfalls modifizierten - Silanol (A) hydrolysiert.

4. Verfahren nach Anspruch 2, **dadurch gekennzeichnet, dass** ein Organosilan der allgemeinen Formel (A1) eingesetzt wird, in dem mindestens einer der beiden nicht-hydrolysierbaren Reste R1 über einen Epoxidring verfügt und vor oder nach der Hydrolyse des Organosilans ein aromatisches Polyol zugesetzt wird.

5. Verfahren nach Anspruch 4, **dadurch gekennzeichnet, dass** als aromatisches Polyol ein Polyol mit einem durchschnittlichen Molekulargewicht von bis zu 1000 eingesetzt wird, ausgewählt aus der Gruppe der Polyphenylenether, die an mindestens zwei Phenylenresten Hydroxygruppen tragen, sowie der Verbindungen, in denen zwei aromatische Ringe durch eine Einfachbindung, gegebenenfalls substituiertes, lineares oder verzweigtes Alkylen, ―O―, ―CO― oder ―SO₂― miteinander verbunden sind und mindestens eine Hydroxygruppe an jeder aromatischen Gruppe aufweisen.

6. Verfahren nach Anspruch 5, **dadurch gekennzeichnet, dass** als aromatisches Polyol ein Polyol mit einer der allgemeinen Formeln (II) oder (III) eingesetzt wird 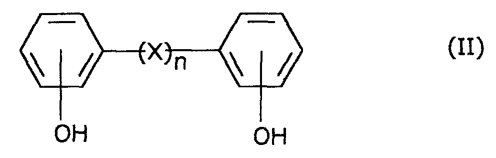 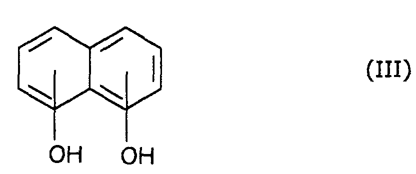 worin X für einen C₁₋₈-Alkylen- oder Alkyliden-Rest, einen C₆₋₁₄-Arylenrest, ―O―, ―S―, ―CO― oder ―SO₂― steht und n gleich 0 oder 1 ist;

7. Verfahren nach Anspruch 5, **dadurch gekennzeichnet, dass** als aromatisches Polyol Bisphenol A, Bisphenol S und/oder 1,5-Dihydroxynaphthalin eingesetzt werden.

8. Verfahren nach Anspruch 2, **dadurch gekennzeichnet, dass** als weitere hydrolysierbare Verbindung eine Verbindung von Zinn, Magnesium, Zink, Aluminium, Titan und/oder Zirkon eingesetzt wird.

9. Zusammensetzung, nämlich Zwischenprodukt oder Endprodukt, wie sie nach dem Verfahren eines der Ansprüche 1 bis 8 erhalten wird.
